# EUROPÄISCHE PATENTSCHRIFT

(11) **EP 1 903 925 B1**
(45) Veröffentlichungstag und Bekanntmachung des Hinweises auf die Patenterteilung: **10.06.2009**
(21) Anmeldenummer: 06763878.3
(22) Anmeldetag: 26.06.2006
(51) Int. Cl.: A47L 9/26, H02G 11/02, B65H 75/48

(54) **AUFWICKELVORRICHTUNG FÜR EIN KABEL EINES ELEKTROGERÄTES**
REELING DEVICE FOR A CORD OF AN ELECTRIC APPLIANCE
DISPOSITIF D'ENROULEMENT POUR LE CABLE D'UN APPAREIL ELECTROMENAGER

(30) Priorität: 15.07.2005 DE 102005033032
(43) Veröffentlichungstag der Anmeldung: 02.04.2008
(73) Patentinhaber: Vorwerk & Co. Interholding GmbH, 42275 Wuppertal (DE)
(72) Erfinder: SOMMER, Jörg, 50737 Köln (DE); GÜNAY, Ridvan, 42119 Wuppertal (DE)
(74) Vertreter: Müller, Enno
(86) Internationale Anmeldenummer: PCT/EP2006/063538
(87) Internationale Veröffentlichungsnummer: WO 2007/009857

(56) Entgegenhaltungen:
- GB-A- 815 740
- US-A- 1 936 463
- US-A- 3 056 995

## Beschreibung

Die Erfindung betrifft eine Aufwickelvorrichtung für ein Kabel eines Elektrogerätes, wie insbesondere für einen Staubsauger, mit einem Stecker und einer ersten Wickelachse.

Elektrogeräte, so weiter beispielsweise Staubsauger, weisen vereinzelt Aufwikkelvorrichtungen für das Kabel zur Elektroversorgung des Gerätes auf. So beispielsweise bei Haushalts-Staubsaugern, welche als verfahrbare Bodengeräte genutzt werden. Eine Aufwickelvorrichtung der in Rede stehenden Art ist beispielsweise aus der DE 34 40 548 A1 bekannt, bei welcher ein abgezogenes Kabel automatisch durch einen Federrückzug wieder auf die Kabeltrommel aufgespult wird. Hierbei rotiert die Kabeltrommel um eine zentrale Trommelachse. Eine derartige Wickelvorrichtung ist weiter auch aus der DE 34 48 046 C2 bekannt. In dieser Patentschrift ist eine in Rede stehende Vorrichtung an einem als Stielgerät ausgeführten Staubsauger angeordnet, konkret im Bereich des stielendseitigen Führungsgriffes des Staubsaugers. Auch diese Aufwickelvorrichtung ist kabeltrommelartig gebildet, mit einer zentralen Achse, um welche das Elektrokabel aufgewickelt wird. Bei größeren Längen des Elektrokabels, wie sie bei üblichen Haushalts-Staubsaugern vorgesehen sind, ergeben sich insbesondere hinsichtlich des Durchmessers und / oder der in Achsrichtung gemessenen Stärke der Vorrichtung handhabungstechnische Nachteile. Durchmesser und / oder Stärke der Vorrichtung sind im Vergleich zum Stiel oder Handgriff zumindest in der Situation, in welcher das Elektrokabel ganz oder nahezu ganz aufgewickelt ist unverhältnismäßig groß. Des Weiteren ergeben sich insbesondere bei einer Anordnung einer solchen Vorrichtung im Bereich eines Staubsaugerstieles, wie in der vorbezeichneten DE 34 48 046 C2 beschrieben, hinsichtlich der Gewichtsverteilung und der damit verbundenen Hebelwirkungen handhabungstechnische Nachteile.

Im Hinblick auf den zuvor beschriebenen Stand der Technik wird eine technische Problematik der Erfindung darin gesehen, eine Aufwickelvorrichtung der in Rede stehenden Art insbesondere handhabungstechnisch weiter zu verbessern.

Die US 1 936 463 A offenbart eine Aufwickelvorrichtung gemäss dem Oberbegriff des Anspruches 1. Diese Problematik ist durch den Gegenstand des Anspruches 1 gelöst, wobei darauf abgestellt ist, dass eine zweite Wickelachse vorgesehen ist und dass die Aufwicklung um beide Wickelachsen in Form von langgestreckten Schlaufen erfolgt, wobei die Beiden Wickelachsen rotationssymmetrische Wickelkörper aufweissen, die mit einem über beide Widellkörper geführten Wickelband zusammenwirken, mit welchen der dem Stecker abgewandte Kabelende verbunden it und umläuft. Entsprechend konzentriert sich das aufgewickelte Kabel nicht mehr wie aus dem Stand der Technik bekannt um eine Wickelachse, so beispielsweise bei einer Kabeltrommel. Durch die Hinzunahme einer zweiten Wickelachse ergibt sich eine langgestreckte Wickelform, was zu einer Reduzierung der in radialer Richtung zu der jeweiligen Wickelachse gemessenen Wickelbreite beitragt. Die gesamte Kabellänge konzentriert sich nicht mehr direkt auf die Wickelachse. Vielmehr ist insbesondere bei einem entsprechend groß gewählten Abstand zwischen den Wickelachsen ein Großteil der Kabellänge in dem den Bereich zwischen den Wickelachsen überbrückenden Abschnitt platziert. Entsprechend ist die vorgenannte radiale Wickelstärke auch abhängig vom Abstand der Wickelachsen zueinander. Durch einen größer gewählten Abstand kann entsprechend die radiale Wickelstärke weiter reduziert werden. Es ergibt sich eine schlanke Bauform der gesamten Aufwickelvorrichtung auch in einer Situation, in welcher das Kabel vollständig oder nahezu vollständig aufgewickelt ist Des Weiteren ergibt sich hieraus eine verbesserte Gewichtsverteilung der Vorrichtung und des aufgewickelten Kabels, was weiter zu einer verbesserten Handhabung des mit dieser Aufwickelvorrichtung versehenen Elektrogeräts führt, so weiter bei Anordnung einer solchen Aufwickelvorrichtung bei einem von Hand zu führenden Staubsauger.

Zufolge der Ausgestaltung, dass die beiden Wikkelachsen rotationssymmetrische Wickelkörper aufweisen, die mit einem über beide Wickelkörper geführten Wickelband zusammenwirken, ist eine Synchronisation der beiden zueinander beabstandeten Wickelkörper erreicht. Das Elektrokabel wird mittels des Wickelbandes über die Wickelkörper zur Auf- bzw. Abwicklung geführt. Bevorzugt wird weiter ein Wickelkörper, welcher als Zahnrad ausgebildet ist, wobei das Wickelband in diesem Zusammenhang als Zahnriemen geformt ist. Entsprechend stehen Wickelkörper und Wickelband in formschlüssigem Eingriff zueinander. Alternativ kann auch eine Kombination aus Reibrad und üblichem reibschlüssig angetriebenem Riemen vorgesehen sein. In einfachster Ausgestaltung kann dies auch ein Seil oder dergleichen sein. Darüber hinaus ist auch eine Zahnrad-Ketten-Kombination zur Bildung der Aufwickelvorrichtung denkbar. Um insbesondere das Aufwickeln des Elektrokabels weiter zu vereinfachen, ist bevorzugt vorgesehen, dass jedenfalls einer der Wickelkörper mit einem Antrieb zusammenwirkt. Dies kann ein Elektroantrieb oder dergleichen sein. Bevorzugt wird jedoch eine mechanische Lösung, bei welcher beispielsweise der Antrieb als Federantrieb ausgebildet ist. Hierbei erweist es sich weiter als vorteilhaft, wenn die Feder des Federantriebs als Torsionsfeder ausgebildet ist, die weiter bevorzugt durch Ausziehen des Kabels gespannt wird. Hierbei kann weiter die Auszugsstellung des Kabels zunächst durch eine Rastung oder dergleichen gesichert sein, um so die Antriebsbelastung über die vorgespannte Torsionsfeder auf das Elektrokabel im Betrieb des Elektrogerätes auszuschließen. Der Antrieb zum Aufwickeln des Kabels wird entsprechend bevorzugt willensbetont ausgelöst, so beispielsweise durch Aufheben einer Rast, wonach die Federkraft zum Aufwickeln freigegeben ist. Die Aufwickelvorrichtung kann Teil eines Elektrostandgerätes, wie beispielsweise ortsveränderbare Haushaltsgeräte sein. Darüber hinaus kann eine derartige Aufwickelvorrichtung auch bei bodenverfahrbaren Haushaltsstaubsaugern Anwendung finden. Die Aufwickelvorrichtung kann im Falle eines stielgeführten Staubsaugers ggf. unlösbar an dem Grundgerät festgelegt sein, so dass nach einem möglichen Entfernen des bevorzugt stromlos gehaltenen Führungsstiels die Vorzüge der Aufwickelvorrichtung weiter vorliegen. In einer weiter vorgeschlagenen Anwendung ist die Aufwikkelvorrichtung Teil eines aussteckbar an dem Staubsauger befestigbaren Staubsaugerstiels. Besonders bei einer solchen Anwendung ergeben sich handhabungstechnische Vorteile, da durch die langgestreckte Aufwicklung über die beiden zueinander beabstandeten Wickelachsen sich bei schlanker Bauform und entsprechend verbesserter Gewichtsverteilung eine verbesserte Handhabbarkeit durch im Vergleich zu dem bekannten Stand der Technik weiter verbesserten Hebeleigenschaften ergibt. So sind bevorzugt die Wickelkörper in Längsrichtung des Stiels distanziert zueinander angeordnet, so beispielsweise ein Wickelkörper in dem dem Handgriff zugewandten stielseitigen Endbereich und ein Wickelkörper in dem in Steckzuordnung zu dem Staubsauger bringbaren Endabschnitt des Stiels. Das dem Stecker abgewandte Kabelende ist mit dem Wickelband verbunden und umläuft entsprechend im Zuge der Auf- bzw. Abwicklung beide Wickelkörper; beschreibt hierbei die Strecke einer langgestreckten Schlaufe. Zur Stromversorgung des Staubsaugers kontaktiert das Kabelende einen Elektroabgriff, welcher weiter bevorzugt innerhalb der Aufwickelvorrichtung ausgebildet ist. Dieser Elektroabgriff weist in einer Ausgestaltung Schleifkontakte auf, die die Rotationsbewegung des an dem Wickelband angebundenen Kabelendes erlauben. Ein solcher Schleifkontakt kann weiter beispielsweise im Bereich eines Wickelkörpers der Aufwickelvorrichtung vorgesehen sein. Alternativ erfolgt der Elektroabgriff in einem, Schleifer aufweisenden Rotationsbauteil. Dieses ist glockenartig ausgeformt. Von diesem geht ein Kabel ab, welches mit dem Wickelband umläuft und dort in das weitere Elektrokabel übergeht. Die Glocke ist hierbei drehbar aufgehängt, wobei zwischen Glocke und Glockenhalterung Schleifkontakte ausgebildet sind. Schließlich wird vorgeschlagen, dass das Rotationsteil in Längsrichtung des Stiels zwischen den Wickelkörpern angeordnet ist, so weiter bevorzugt mittig zwischen den Wikkelkörpern.

Nachstehend ist die Erfindung anhand der beigefügten Zeichnung, welche lediglich ein Ausführungsbeispiel darstellt, näher erläutert. Es zeigt:
- Fig. 1: in perspektivischer Darstellung einen Haushalts-Staubsauger in Form eines Stielgeräts mit einer erfindungsgemäßen Aufwickelvorrichtung;

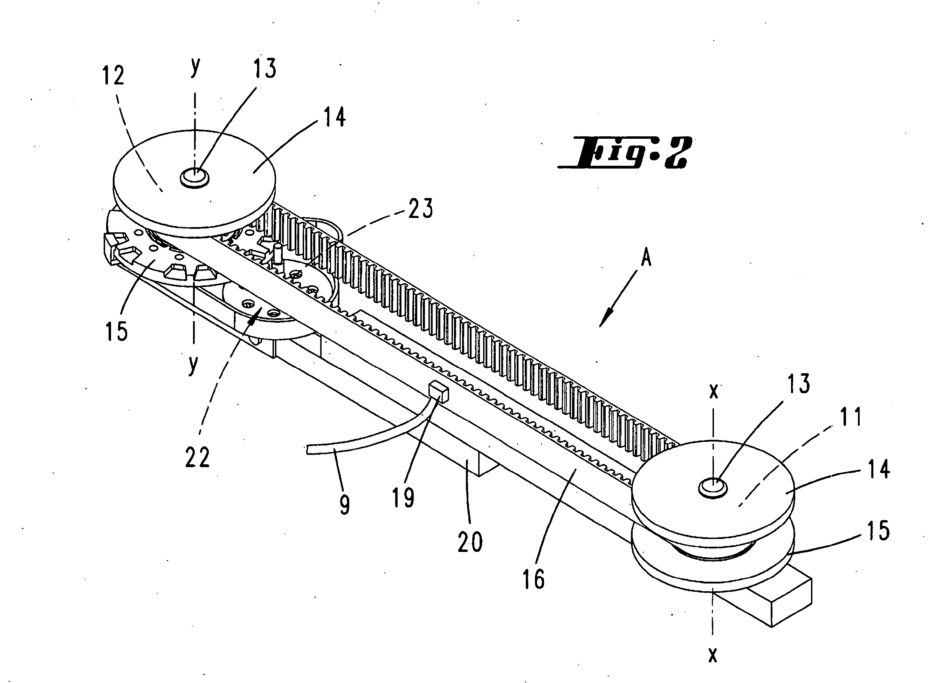

- Fig. 2: die Aufwickelvorrichtung in einer perspektivischen Einzeldarstellung unter Fortlassung des diese Vorrichtung aufnehmenden Gehäuses;

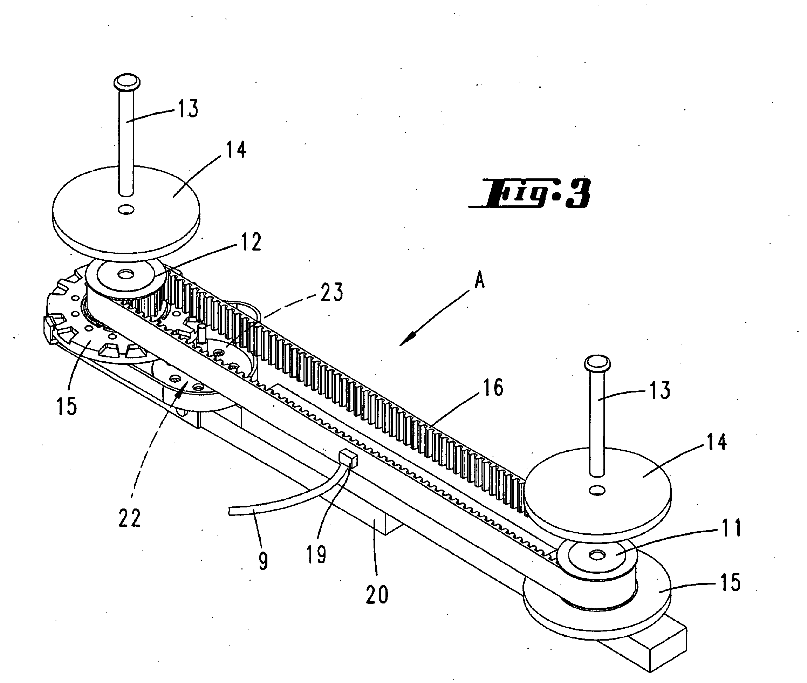

- Fig. 3: eine teilweise explosionsperspektivische Darstellung der Ansicht gemäß Fig. 2;
- Fig. 4: eine weitere explosionsperspektivische Darstellung eines Endbereiches der Aufwickelvorrichtung mit einem einem Wickelkörper zugeordneten Federantrieb;
- Fig. 5: die Aufwickelvorrichtung in einer Seitendarstellung mit in strichpunktierter Linienart wiedergegebenem Gehäuse und Staubsaugerstiel;
- Fig. 6: in einer Draufsicht eine schematische Darstellung der Aufwickelvorrichtung.

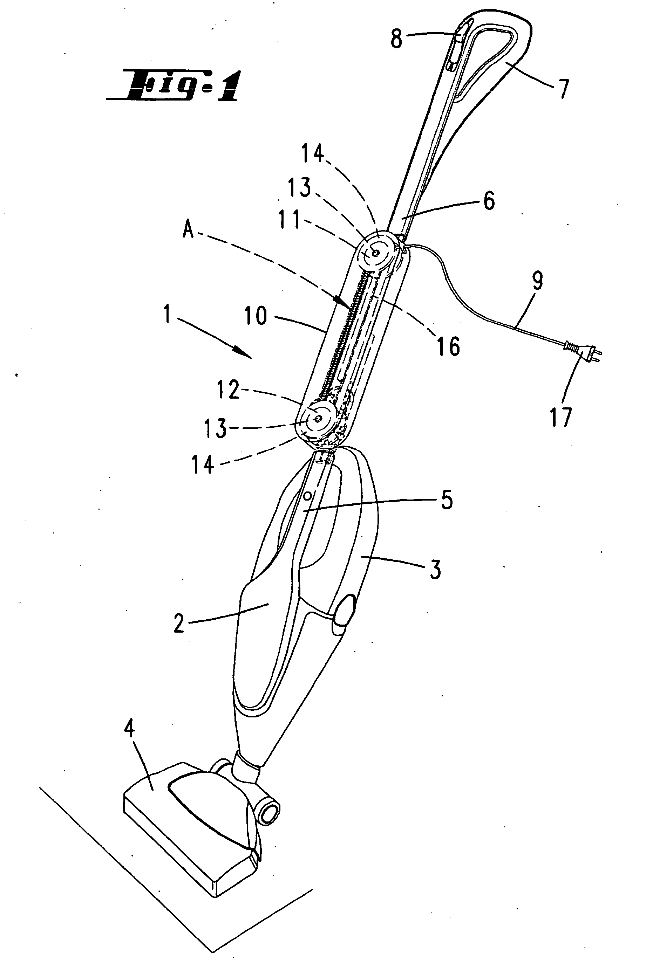

Dargestellt und beschrieben ist, zunächst mit Bezug zu Fig. 1, ein Elektrogerät in Form eines Haushalts-Staubsaugers 1, welches als stielgeführtes Gerät ausgebildet ist. Der Staubsauger 1 weist zunächst ein, eine nicht dargestellte Saug-/ Gebläse-Einheit aufweisendes Grundgerät 2 auf, welches in einer schwenkbaren Filterkassette 3 einen nicht dargestellten Staubfilterbeutel trägt.

Fußseitig ist an dem Grundgerät 2 ein Vorsatzgerät 4 sowohl strömungsmäßig als auch elektrisch angebunden. Dieses Vorsatzgerät 4 dient zur Saug- und ggf. Bürstbearbeitung des zu pflegenden Bodens.

Von dem Grundgerät 2 geht ein schwanenhalsartiger Fortsatz 5 ab, welcher sich über dem Bereich der Filterkassette 3 erstreckt. Im Bereich des freien Endes formt dieser Fortsatz 5 eine Steckaufnahme für einen Stiel 6 des Staubsaugers 1 aus. Die zugeordneten Enden der Fortsatz-Aufnahme und des Stiels 6 sind in bekannter Weise als mechanische Steckverbindungselemente ausgebildet.

Im Bereich des freien Endes des Stieles 6 ist ein Betätigungsgriff 7 ausgeformt. Dieser weist an ergonomischer Position eine daumenbetätigbare Stelleinheit 8 in Form eines Schiebeschalters auf, über welche die Leistung des in dem Grundgerät 2 aufgenommenen Elektromotors einstellbar ist.

Die Stromversorgung des Grundgerätes 2 und ggf. des Vorsatzgerätes 4 erfolgt über ein Elektrokabel 9, welches im Wesentlichen in den Stiel 6 einläuft, wobei weiter die Steckverbindung zwischen Stiel 6 und Fortsatz 5 des Grundgerätes 2 Elektrosteckverbindungen aufweist, zur elektrischen Kopplung von Stiel 6 und Grundgerät 2.

Der Stiel 6 ist an dem Staubsauger 1 bzw. Grundgerät 2 aussteckbar gehaltert.

An dem Stiel 6 ist eine Elektrokabel-Aufwickelvorrichtung A befestigt. Diese ist in einem Vorrichtungsgehäuse 10 integriert und zusammen mit dem Stiel 6 lösbar an dem Staubsauger-Grundgerät 2 steckgehaltert. Alternativ kann die Aufwickelvorrichtung auch direkt am Grundgerät 2, bspw. im Bereich des Fortsatzes 5 festgelegt sein.

Die Aufwickelvorrichtung A weist zunächst zwei Wickelkörper 11, 12 auf, die in Längsrichtung des Stiels 6 distanziert zueinander angeordnet sind. Diese Wickelkörper 11,12 sind drehbar um senkrecht zur Längserstreckung des Stiels 6 ausgerichtete Wickelachsen x, y gelagert, welche Wickelachsen x, y von Achskörpern 13 gebildet sind, die in einem Tragteil 14 der Aufwickelvorrichtung A fußen.

Die Wickelkörper 11 und 12 sind als Zahnräder ausgebildet. Ober- und unterseitig ist jeder Wickelkörper 11,12 bzw. jedes Zahnrad durch in Achsrichtung zueinander distanziert angeordneten Deckscheibe 14,15 flankiert, zufolge dessen sich in einem Querschnitt ein U-Aufnahmeraum ergibt, dessen U-Schenkel durch die Deckscheiben 14 und 15 und der U-Steg durch den Wickelkörper 11 bzw. 12 geformt sind.

Die beiden rotationssymmetrischen Wickelkörper 11 und 12 wirken mit einem über beide Wickelkörper 11 und 12 geführtes Wickelband 16 in Form eines Zahnriemens zusammen. Dieser trägt das dem Netzstecker 17 des Elektrokabels 9 abgewaridte Kabelende; bewegt dieses Kabelende entsprechend bei einer Transmission auf einer langgestreckten Umlaufbahn.

Das Kabelende ist an dem Wickelband 16 im Bereich eines, ggf. schellenartigen Befestigungspunktes 19 gehaltert. Von diesem ausgehend kann die elektrische Verbindung so gelöst sein, dass die Elektroleiter mit in dem Wickelband 16 integrierten Leitern verbunden sind, die wiederum über Kontaktierung mit vorgesehenen Schleifkontakten die elektrische Verbindung zu den stielseitigen Kabeln herstellen.

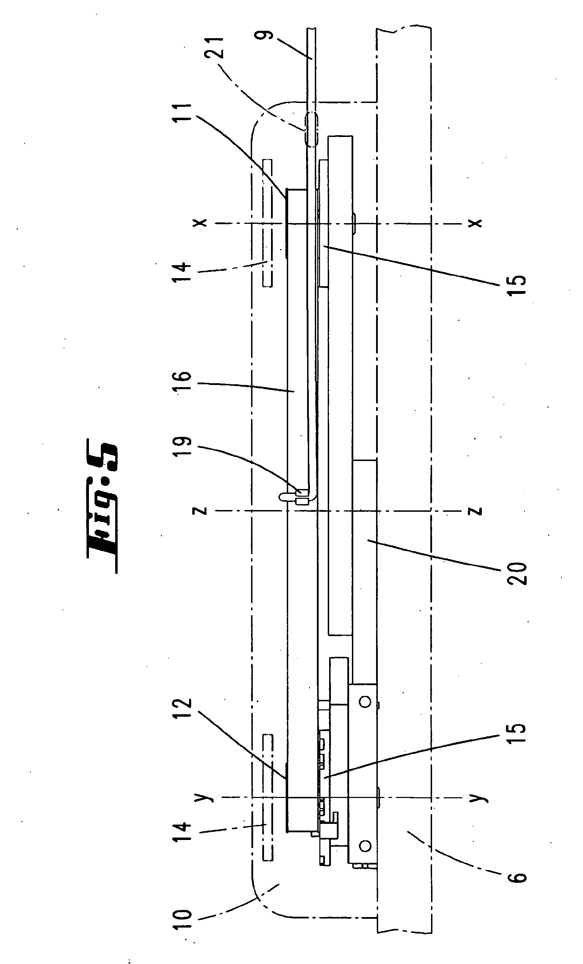

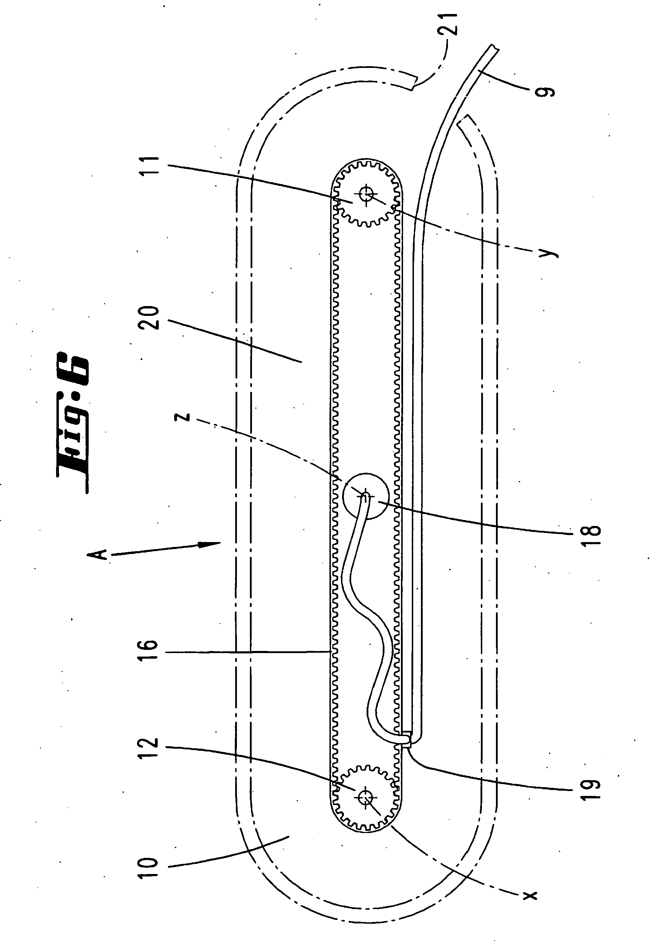

Alternativ ist der an dem Wickelband 16 festgelegte, endseitige Kabelabschnitt gemäß den Darstellungen in den Figuren 5 und 6 in einen Bereich zwischen die Wickelkörper 11 und 12 weitergeführt, in welchem gleichfalls auf dem Grundträger 20 befestig ein Rotationsbauteil 18 mit integriertem Elektroabgriff in Form von Schleifkontakten vorgesehen ist. Die Drehachse des Rotationsbauteils 18 verläuft parallel zu den Wickelachsen x und y. Wie insbesondere aus der schematischen Darstellung in Fig. 6 zu erkennen, handelt es sich hierbei um ein Glockenbauteil, in welches zentral das zugeordnete Ende des Elektrokabels 9 einläuft. Zwischen diesem Anschluss und dem Befestigungspunkt 19 des Elektrokabels 9 an dem Wickelband 16 ist das Elektrokabel 3 mit einem Längenvorrat angeordnet, welcher angepasst ist an die größtmögliche Entfernung zwischen Rotationsbauteil 18 und Befestigungspunkt 19 am Wickelband 16. So entspricht die Länge dieses Elektrokabelabschnittes bei Anordnung des Rotationsbauteiles 18 mittig zwischen den Wickelkörpern 11 und 12 mindestens dem Abstand zwischen der parallel zu den Wickelachsen x, y ausgerichteten Rotationsachse z des Rotationsbauteiles 18 und dem Umkehrpunkt des Wickelbandes 16 auf dem Wickelkörper 11 bzw. 12.

Über die in dem Rotationsbauteil 18 vorgesehenen, nicht dargestellten Schleifkontakte erfolgt die elektrische Kontaktierung des Elektrokabels 9 mit den in dem Stiel 6 vorgesehenen Elektroleitern.

Die dem Befestigungspunkt 19 am Wickelband 16 zugeordneten Deckscheiben, sowie die Achskörper der Wickelkörper 11 und 12 sind so bemessen und platziert, dass ein durchgehender Spalt zum Durchtritt des zum mittig angeordneten Rotationsbauteil 18 führenden Kabelabschnitts verbleibt.

Das die Aufwickelvorrichtung A aufnehmende Gehäuse 10 besitzt zugewandt einem Wickelkörper 11 ein Fenster 21 zum Durchtritt des Elektrokabels 9.

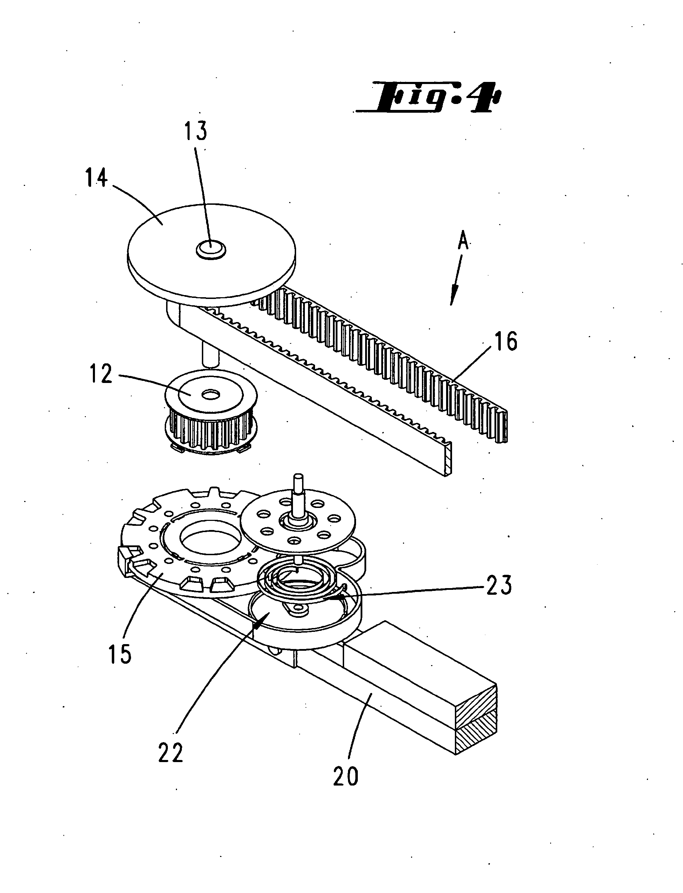

Der Wickelkörper 12 wirkt mit einem Antrieb 22 zusammen. Dieser ist als Federantrieb ausgebildet, wozu eine Torsionsfeder 23 vorgesehen ist (vgl. Fig. 4).

Diese Torsionsfeder 23 wird im Zuge eines Abwickelns und damit einhergehender Transmission des Wickelbandes 16 gespannt. Dies weiter unterstützt durch die formschlüssige Zusammenwirkung von Wickelband 16 und Wickelkörpern 11 und 12.

Die Ausziehstellung des Elektrokabels 9 in einer gewählten Länge ist durch eine Rast gesichert, dies unter Speicherung der aufgebauten Federkraft. Diese Rast wird durch zweimaliges, kurz hintereinander erfolgendes Ziehen an dem Elektrokabel 9 herbeigeführt.

Durch kurzes, einmaliges Ziehen an dem Elektrokabel wird die Rast aufgehoben. Die Federkraft des Antriebs 22 wird freigegeben, was zu einem Drehen in Rückspulrichtung des zugeordneten Wickelkörpers 12 und über diesen des Wickelbandes 16 und des Wickelkörpers 11 führt. Das Elektrokabel 9 wird hierbei auf den Umfang des Wickelbandes 16 gewickelt, wobei einem Auswandern des Elektrokabels 9 in Erstreckungsrichtung der Wickelachsen x bzw. y durch die Deckscheiben 14,15 verhindert ist.

Durch die gewählte Ausgestaltung ist eine insgesamt schlanke Bauform einer Aufwickelvorrichtung A geschaffen, was sich insbesondere bei einer Anordnung an einem Staubsaugerstiel 6 sich handhabungstechnisch als Vorteil erweist. In dem dargestellten Ausführungsbeispiel ist ein Abstand der Wickelachsen x und y zueinander gewählt, der etwa dem 5- bis 10-Fachen, bevorzugt etwa dem 7- oder 8-Fachen des Durchmessers eines Wickelkörpers 11 bzw. 12 entspricht.

## Patentansprüche

1. Aufwickelvorrichtung (A) für ein Kabel (9) eines Elektrogerätes, wie insbesondere für einen Staubsauger (1), mit einem Stecker (17) und einer ersten Wickelachse (x), **dadurch gekennzeichnet, dass** eine zweite Wickelachse (y) vorgesehen ist, dass die Aufwicklung um beide Wickelachsen (x, y) in Form von langgestreckten Schlaufen erfolgt, wobei die beiden Wickelachsen (x, y) rotationssymmetrische Wickelkörper (11, 12) aufweisen, die mit einem über beide Wickelkörper (11,12) geführten Wickelband (16) zusammenwirken, mit welchem das dem Stecker abgewandte Kabelende verbunden ist und umläuft.

2. Aufwickelvorrichtung nach Anspruch 1 , **dadurch gekennzeichnet, dass** ein Wickelkörper (11,12) als Zahnrad ausgebildet ist und dass das Wickelband (16) als Zahnriemen ausgebildet ist.

3. Aufwickelvorrichtung nach Anspruch 1 oder 2, **dadurch gekennzeichnet, dass** jedenfalls einer der Wickelkörper (11,12) mit einem Antrieb (22) zusammenwirkt.

4. Aufwickelvorrichtung nach Anspruch 3, **dadurch gekennzeichnet, dass** der Antrieb (22) als Federantrieb ausgebildet ist.

5. Aufwickelvorrichtung nach Anspruch 4, **dadurch gekennzeichnet, dass** die Feder des Federantriebs als Torsionsfeder (23) ausgebildet ist.

6. Aufwickelvorrichtung nach einem der Ansprüche 4 oder 5, **dadurch gekennzeichnet, dass** die Feder durch Ausziehen des Kabels (9) gespannt wird.

7. Aufwickelvorrichtung nach einem der Ansprüche 1 bis 6, **dadurch gekennzeichnet, dass** die Aufwickelvorrichtung (A) Teil eines aussteckbar an dem Staubsauger (1) befestigbaren Staubsaugerstiels (6) ist.

8. Aufwickelvorrichtung nach einem der Ansprüche 1 bis 7, **dadurch gekennzeichnet, dass** die Wickelkörper (11,12) in Längsrichtung des Stiels (6) distanziert zueinander angeordnet sind.

9. Aufwickelvorrichtung nach einem der Ansprüche 1 bis 8, **dadurch gekennzeichnet, dass** zur Stromversorgung des Staubsaugers (1) das Kabelende einen Elektroabgriff kontaktiert.

10. Aufwickelvorrichtung nach Anspruch 9, **dadurch gekennzeichnet, dass** der Elektroabgriff Schleifkontakte aufweist.

11. Aufwickelvorrichtung nach einem der Ansprüche 9 oder 10, **dadurch gekennzeichnet, dass** der Elektroabgriff in einem, Schleifer aufweisenden Rotationsbauteil (18) erfolgt.

12. Aufwickelvorrichtung nach Anspruch 11, **dadurch gekennzeichnet, dass** das Rotationsbauteil (18) in Längsrichtung des Stiels (6) zwischen den Wickelkörpern (11,12) angeordnet ist.

## Claims

1. Reeling device (A) for a cable (9) of an electrical appliance, in particular for a vacuum cleaner (1), having a plug (17) and a first reeling axis (x), **characterized in that** a second reeling axis (y) is provided, and **in that** the cable is reeled around both reeling axes (x, y) in the form of elongate loops, the two reeling axes (x, y) having rotationally symmetrical reeling bodies (11, 12) which interact with a reeling band (16) directed over both reeling bodies (11, 12) and to which the cable end which is remote from the plug is connected, this cable end thus moving around with the reeling band.

2. Reeling device according to Claim 1, **characterized in that** a reeling body (11, 12) is in the form of a gearwheel, and **in that** the reeling band (16) is in the form of a toothed belt.

3. Reeling device according to claim 1 or 2, **characterized in that** at least one of the reeling bodies (11, 12) interacts with a drive (22).

4. Reeling device according to claim 3, **characterized in that** the drive (22) is in the form of a spring drive.

5. Reeling device according to claim 4, **characterized in that** the spring of the spring device is in the form of a torsion spring (23).

6. Reeling device according to either of claims 4 and 5, **characterized in that** the spring is tensioned by virtue of the cable (9) being drawn out.

7. Reeling device according to one of claims 1 to 6, **characterized in that** the reeling device (A) is part of a vacuum-cleaner shaft (6) which can be secured to the vacuum cleaner (1) such that it can be unplugged therefrom.

8. Reeling device according to one of claims 1 to 7, **characterized in that** the reeling bodies (11, 12) are spaced apart from one another in the longitudinal direction of the shaft (6).

9. Reeling device according to one of claims 1 to 8, **characterized in that,** in order to supply power to the vacuum cleaner (1), the cable end makes contact with an electrical power pick-up.

10. Reeling device according to claim 9, **characterized in that** the electrical power pick-up has sliding contacts.

11. Reeling device according to either of claims 9 and 10, **characterized in that** the electrical power pick-up is effected in a rotary component (18) having pick-up shoes.

12. Reeling device according to claim 11, **characterized in that** the rotary component (18) is disposed between the reeling bodies (11, 12) as seen in the longitudinal direction of the shaft (6).

## Revendications

1. Dispositif d'enroulement (A) pour un câble (9) d'un appareil électroménager, en particulier pour un aspirateur (1), comprenant une prise mâle (17) et un premier axe d'enroulement (x), **caractérisé en ce qu'**il est prévu un second axe d'enroulement (y) et **en ce que** l'enroulement autour des deux axes d'enroulement (x, y) s'effectue sous la forme de boucles allongées, dans lequel les deux axes d'enroulement (x, y) présentent des corps d'enroulement (11, 12) à symétrie de rotation, qui coopèrent avec une bande d'enroulement (16) guidée sur les deux corps d'enroulement (11, 12), à laquelle bande est raccordée l'extrémité de câble opposée à la prise mâle et avec laquelle elle tourne.

2. Dispositif d'enroulement selon la revendication 1, **caractérisé en ce qu'**un corps d'enroulement (11, 12) se présente sous la forme d'une roue dentée et **en ce que** la bande d'enroulement (16) est conformée en courroie crantée.

3. Dispositif d'enroulement selon la revendication 1 ou 2, **caractérisé en ce qu'**un des corps d'enroulement (11, 12) coopère en tout cas avec un dispositif d'entraînement (22).

4. Dispositif d'enroulement selon la revendication 3, **caractérisé en ce que** le dispositif d'entraînement (22) se présente sous la forme d'un entraînement à ressort.

5. Dispositif d'enroulement selon la revendication 4, **caractérisé en ce que** le ressort de l'entraînement à ressort est conformé en ressort de torsion (23).

6. Dispositif d'enroulement selon l'une quelconque des revendications 4 ou 5, **caractérisé en ce que** le ressort est tendu par extension du câble (9).

7. Dispositif d'enroulement selon l'une quelconque des revendications 1 à 6, **caractérisé en ce que** le dispositif d'enroulement (A) fait partie d'un manche d'aspirateur (6) pouvant être fixé de manière détachable sur l'aspirateur (1).

8. Dispositif d'enroulement selon l'une quelconque des revendications 1 à 7, **caractérisé en ce que** les corps d'enroulement (11, 12) sont espacés l'un de l'autre dans la direction longitudinale du manche (6).

9. Dispositif d'enroulement selon l'une quelconque des revendications 1 à 8, **caractérisé en ce que** l'extrémité de câble est mise en contact avec une prise électrique pour alimenter l'aspirateur (1).

10. Dispositif d'enroulement selon la revendication 9, **caractérisé en ce que** la prise électrique présente des contacts frottants.

11. Dispositif d'enroulement selon l'une quelconque des revendications 9 ou 10, **caractérisé en ce que** la prise électrique s'effectue dans un composant rotatif (18) présentant des contacts frottants.

12. Dispositif d'enroulement selon la revendication 11, **caractérisé en ce que** le composant rotatif (18) est aménagé dans la direction longitudinale du manche (6) entre les corps d'enroulement (11, 12).
